# EUROPEAN PATENT SPECIFICATION

(11) **EP 3 885 104 B1**
(45) Date of publication and mention of the grant of the patent: **12.06.2024**
(21) Application number: 20165122.1
(22) Date of filing: 24.03.2020
(51) Int. Cl.: B29C 53/84, H01F 41/06, B29C 53/00, B29C 53/62, B29C 53/82

(54) **COIL POLYMERIZATION DURING WINDING PROCESS BY HOT AIR**
SPULENPOLYMERISIERUNG WÄHREND DES WICKELPROZESSES DURCH HEISSLUFT
POLYMÉRISATION DE BOBINE PENDANT UN PROCESSUS D'ENROULEMENT PAR AIR CHAUD

(43) Date of publication of application: 29.09.2021
(73) Proprietor: Assa Abloy AB, 107 23 Stockholm (SE)
(72) Inventor: DEFFERRARD, Joel, 10723 Stockholm (SE); RICHARD, Julien, 10723 Stockholm (SE)
(74) Representative: Kramer Barske Schmidtchen Patentanwälte PartG mbB

(56) References cited:
- EP-A2- 2 680 283
- WO-A1-2009/054079

## Description

### Technical Field

The present disclosure generally relates to the technical field of coil manufacturing and particularly to the heating of an RFID coil during its winding process.

### Background

In the context of producing RFID coils of wire with a bonding coat, it is important to have a good polymerization of the bonding coat. The wire itself may be made of copper. A good polymerization of the individual windings ensures that the layers of the coil stick together and prevents the disassembly of the coil layers after production. To realize a good polymerization, the bonding coat of the copper wire needs to be heated. The heating may be created by the injection of hot air, by electrical resistance heating or by an oven.

In a known manufacturing process the heating of the wire coat is being carried after the coil winding. One disadvantage of this method can be that the heating time is very long and the machine cycle time can be increased. A further disadvantage of this method might be that the heating occurs not optimal and not uniformly. For example, on external layers of the coil only.

WO 2009/054079 A1 discloses a coil winding device for winding a joined coil in which a plurality of coils are joined. The coil winding device comprises a winding axis which is rotated on the axis and which can move in an axis direction, a nozzle which let out a line member to the winding axis and which can move in the axis direction of the winding axis, and a chuck which defines the end of the coil at the time of the winding of the coil and which permits the entrance of the winding axis after the winding of the coil. The coil wounded on the winding axis is sequentially housed in the chuck. A plurality of coils are wound in series on the winding axis.

EP 2 680 283 A2 describes an apparatus for manufacturing a non-circular coil. The apparatus includes a pair of swinging pieces, an operation piece to be inserted and removed from between the distal ends of the pair of swinging pieces to increase or reduce the distance between the distal ends of the pair of swinging pieces, and a winding mechanism for winding a wire around an outer circumference of a distal end of the pair of swinging pieces so as to form a non-circular coil. Side surfaces of the operation piece, which avoid contact with the pair of swinging pieces, bulge outward to be curved and are formed so as to be continuous with outer circumferential surfaces of the pair of swinging pieces, around which the wire is wound, in a state in which the operation piece is inserted between the distal ends of the pair of swinging pieces.

The present disclosure is directed, at least in part, to improving or overcoming one or more aspects of prior systems.

### Summary of the Disclosure

According to one aspect, the present disclosure relates to a tool holder according to claim 1.

According to another aspect, the present disclosure relates to a coil winding device according to claim 5.

According to another aspect, the present disclosure relates to a method according to claim 9.

Further developments are given in the dependent claims.

### Brief Description of the Drawings

Fig. 1 illustrates an exemplary embodiment of a coil winding device according to the present disclosure.
Fig. 2 illustrates a tool holder, which is a part of the coil winding device shown in Fig. 1, in more detail.
Fig. 3 illustrates the tool holder shown in Fig. 2 in a view along line A-A of Fig. 2
Fig. 4 illustrates the flow of hot air into and out of the tool holder shown in Fig. 1-3.
Fig. 5 illustrates a coil counter-tool of the coil winding device as shown in Fig. 1 and 2 in more detail.
Fig. 6 illustrates an exchangeable tool part of the exemplary embodiment of the tool holder shown in Figs. 1-4, showing the side on which the first winding limiting surface is provided.
Fig. 7 illustrates another view of the exchangeable tool part of Fig. 6, here the opposite side of the first winding limiting surface is shown.
Fig. 8 illustrates exemplary embodiments of various configurations/patterns of hot air outlet ports.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

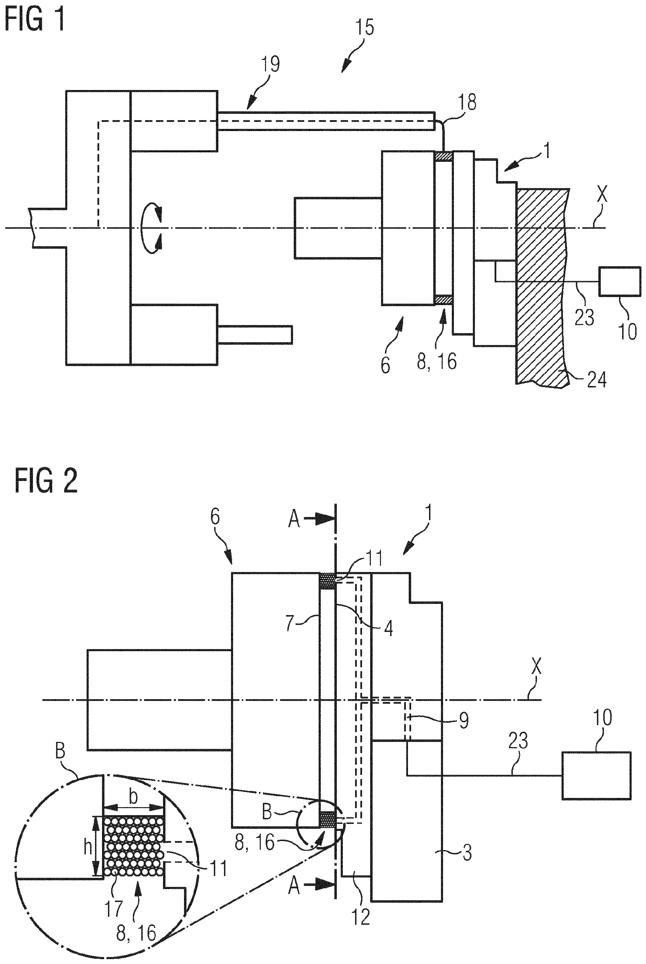

Fig. 1 illustrates an exemplary embodiment for a coil winding device 15 according to the present disclosure. The coil winding device 15 comprises a tool holder 1, a coil counter-tool 6, a hot air source 10 and a wire guiding 19. The tool holder 1 is fixed to a workbench 24 or the like, preferably a turning table. The coil counter-tool 6 is immovably connected to the tool holder. Between the coil counter-tool 6 and the tool holder 1 a winding gap 8 is formed. A coil 16 is being wound in the winding gap 8. The coil 16 is being wound by a wire guiding 19, also called flyer, which feeds a wire 18 into the winding gap 8 and turns around the winding gap 8.

The wire guiding 19 may also move in direction of an axis X during the winding process to produce coils 16 with multiple windings in one layer. A hot air source 10 (shown schematically) is connected to the tool holder 1 via connection pipes 23 (shown schematically). The hot air is guided by hot air ducts 9 (not shown) within the tool holder 1 and is injected into the winding gap 8 during the winding process of the coil 16.

Fig. 2 illustrates a tool part of the coil winding device 15 shown in Fig. 1 in more detail. The winding gap 8 is defined by the first winding limiting surface 4 provided on the tool holder 1 and a second winding limiting surface 7 provided on the coil counter-tool 6. The winding gap 8 has a longitudinal dimension limiting a winding width b and a radial dimension limiting the winding height h. The tool holder 1 may be provided with a hot air duct 9 (schematically shown). The hot air duct 9 may be connected to a hot air source 10 via connection pipes 23 (schematically shown). Further, the hot air duct 9 comprises hot air outlet ports 11 provided within the first winding limiting surface 4. The hot air outlet ports 11 inject the hot air into the winding gap 8 and thus heat the coil 16. The heating is conducted during the winding process of the coil 16.

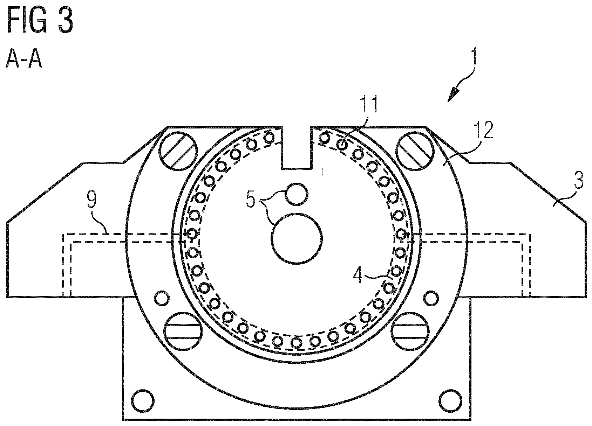

Fig. 3 illustrates the tool holder of Fig. 1-2 in a view along line A-A of Fig. 2. The winding limiting surface 4 is provided with a fixture 5. The fixture 5 is configured to detachably receive the coil counter-tool 6. The first winding limiting surface 4 comprises a plurality of hot air outlet ports 11 uniformly distributed over the first winding limiting surface 4. The first winding liming surface 4 and the hot air outlet ports 11 are provided on an exchangeable tool part 12 which can be detached from the remaining part of the holder body 3.

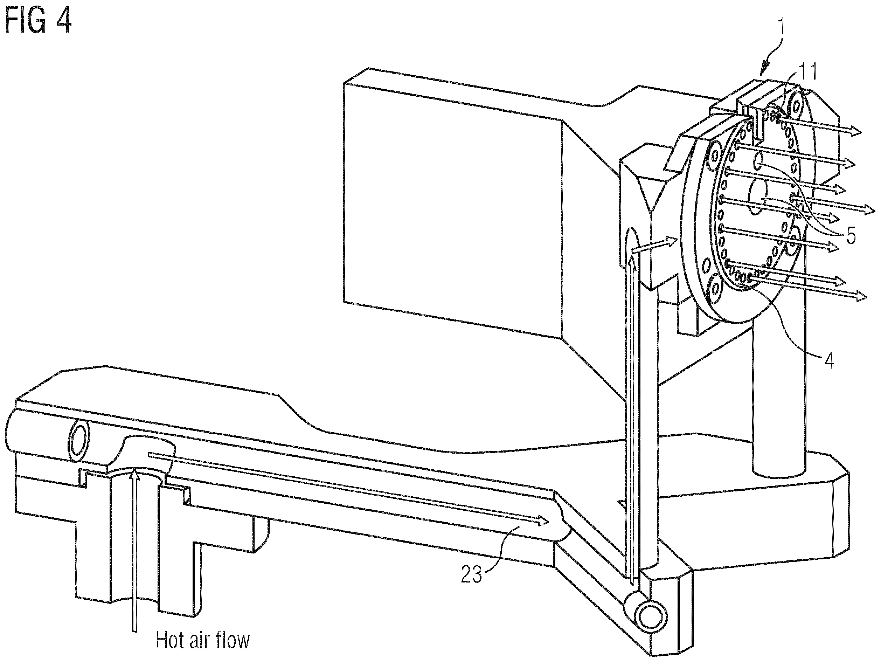

Fig. 4 illustrates the flow of hot air into and out of the tool holder shown in Fig. 1-3.

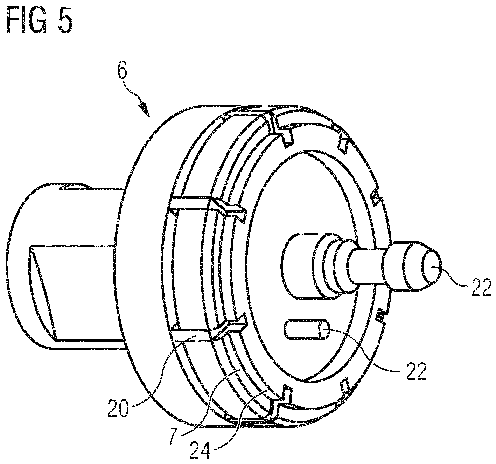

Fig. 5 illustrates the coil counter-tool shown in Fig. 1-2 in more detail. The coil counter-tool 6 comprises the second winding liming surface 7. The coil counter-tool 6 also comprises a coil body 24. The coil 16 is wound between the first and second winding limiting surface 4, 7 and around the coil body 24. By means of two pins 22 the coil counter-tool 6 is fixed to the fixture 5 of the tool-holder 1. The two pins 22 ensure that the coil counter-tool 22 cannot move linearly and rotationally when the coil counter-tool 6 is connected to the tool holder 1. Ejectors 20 are provided on the coil-counter tool 6. The ejectors 20 are relatively movable to the second winding limiting surface 7 and can be moved such that they protrude from the second winding limiting surface 7. By means of the ejectors 20, the coil 16 can be pushed away from the second winding limiting surface 7 and by this removed from the coil counter-tool 6 (the coil counter-tool 6 being in disconnected position with the tool holder 1).

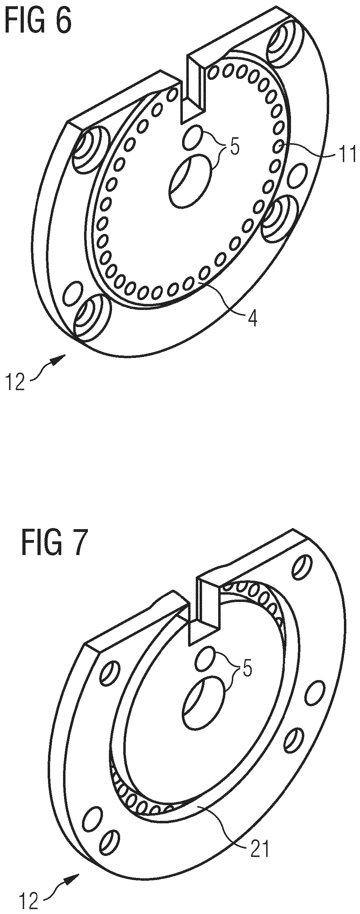

Fig. 6 and Fig. 7 illustrate the exchangeable tool part 12 of the embodiment as shown in Fig. 1-4. Fig. 6 shows the side of the exchangeable tool part 12 on which the first winding limiting surface 4 is provided. Fig. 7 shows the opposite side of the side on which the first winding limiting surface 4 is provided. The hot air provided by the hot air source 10 is guided into the circumferential ring groove 21 on the back side of the exchangeable tool part 12. The circumferential ring groove 21 is fluidly connected with the hot air outlet ports 11 on the front side of the exchangeable tool part 12. The circumferential ring groove 21 is configured to provide all the hot air outlet ports 11 with hot air.

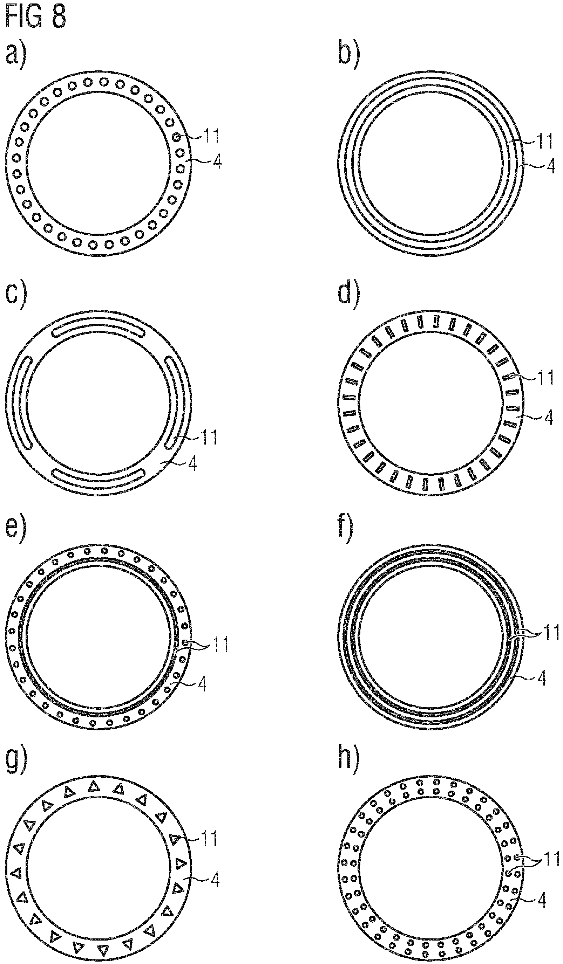

Fig. 8 illustrates exemplary embodiments for configurations of hot air outlet ports 11 provided on the first winding limiting surface 4. Some configurations comprise a plurality of hot air outlet ports 11 with circular shape (example a) and h)), with rectangular shape (example d)) or with triangle shape (example g)). Other configurations comprise a hot air outlet port 11 in form of one circumferential ring groove (example b)), multiple circumferential ring grooves (example f)) or a combination of at least one circumferential ring groove with a plurality of hot air outlet ports with circular shape (example e)). Another configuration comprises hot air outlet ports 11 in form of grooves (example c)) uniformly distributed within circular sections of the first winding limiting surface (4).

### Industrial Applicability

The present disclosure is based at least in part on the realization that there is a need for an improved manufacturing process for RFID coils of copper wire with a bonding coat. For the manufacturing of coils of copper wire with a bonding coat, it might be important to have a good polymerization of the bonding coat. The bonding coat may be of Polyvinyl butyral, Polyester or Polyamide. A good polymerization ensures that the layers of the coil stick together and prevents the disassembly of the coil layers after production. Contrary to conventional techniques, according to the present disclosure the coil can be is heated already and constantly during the winding process. Furthermore, the heating may be directed to all coil layers and between the individual coil windings and not primarily on the external layers of the coil as at the known coil winding devices. Further, the disclosed device and method may reduce the total heating time and may decrease the machine cycle time.

It has been realized that it is advantageous to heat the coil during the winding process across its winding height, i.e. the coil dimension perpendicular to the winding axis X, with hot air. This method might improve the quality of the polymerization and might reduce the heating process time/the cycle time. At the hot air outlet port 11, the injected hot air preferably has a temperature of 100°C to 300°C, particularly of 140°C to 230°C. Consequently, the hot air source 10 has to produce hot air with a higher temperature which may be 200°C to 500°C, particularly at least 300°C. Summarizing, the hot air produced by the hot air source 10 has such a temperature that the temperature at the at least one outlet port is high enough, to melt the wire 18.

According to a preferred embodiment of the disclosure, the injection of hot air occurs at a radial circumferential surface of the winding gap 8. To ensure that the injection of hot air sufficiently heats every winding 17 of the coil 16, the injection of hot air may occur uniformly at the radial circumference surface 4 of the winding gap 8 through a plurality of hot air outlet ports 11 or through at least one circumferential ring groove. Other configurations of hot air outlet ports 11 may be used as well.

The above described method may be performed with a coil winding device according to the present disclosure. The coil winding may be performed with an embodiment where the wire guiding 19 is configured to rotate around the winding gap 8, which is fixed. In another embodiment the coil winding may be performed by a rotating coil body which is provided in the winding gap 8 configured to wind the coil 16 by a rotational movement. The wire guiding 19 in this embodiment does not rotate.

The coil counter-tool 6 of the coil winding device 15 may comprise an ejector 20 configured to eject the coil 16 from the coil counter-tool 6. The ejector 20 as well as the connection of tool-holder 1 and coil counter-tool 6 are configured to allow the automatic removal of the coil counter-tool from the tool-holder and the coil from the coil counter-tool and the realization of short processing times.

A preferred embodiment of the tool-holder 1 of the coil winding device 15 comprises a plurality of hot air outlet ports 11 which are uniformly distributed within the first winding limiting surface 4 such that the windings 17 are heated across at least a part of the winding height h during the winding process. The outlet ports 11 may have different shapes for example have a circular shape, a rectangular shape or a triangle shape, all of which ensure that the windings of the coil are properly heated.

In another preferred embodiment of the tool holder 1 the at least one hot air outlet port 11 includes at least one circumferential ring groove on the first winding limiting surface 4 such that the windings 17 are heated across at least a part of the winding height h during the winding process.

Other configurations may be used as well to properly heat the windings of the coil. For example the at least one circumferential ring groove may be combined with a plurality of hot air outlet ports as described above. Another example is a configuration which has multiple grooves uniformly distributed within circular sections of the first winding limiting surface 4.

The first winding limiting surface 4 and the at least one hot air outlet port 11 preferably are provided on an exchangeable tool part 12. The exchangeable tool part 12 allows that different configurations of the first winding limiting surface 4 and/or the at least one hot air outlet port 11 can be realized by changing only the exchangeable tool part 12. The remaining part of the tool holder does not to be changed.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein. All method steps described herein can be performed in any suitable order, unless otherwise indicated or clearly contradicted by the context.

Although the preferred embodiments of this disclosure have been described herein, improvements and modifications may be incorporated without departing from the scope of the following claims.

## Claims

1. A tool holder (1) configured to be used in a coil winding device (15), the tool holder (1) comprising:
a holder body (3) provided with a first winding limiting surface (4);
a fixture (5) arranged within the first winding limiting surface (4), the fixture (5) being configured to detachably receive a coil counter-tool (6) provided with a second winding limiting surface (7),
wherein the first and second winding limiting surfaces (4, 7) define a winding gap (8) having a longitudinal dimension limiting a winding width (b) and a radial dimension limiting a winding height (h);
at least one hot air duct (9) provided within the holder body (3) and configured to be connected with a hot air source (10); the tool holder (1) being **characterised in that** it further comprises
at least one hot air outlet port (11) provided within the first winding limiting surface (4), the at least one hot air outlet port (11) being fluidly connected to the at least one hot air duct (9).

2. The tool holder (1) according to claim 1, further comprising a plurality of hot air outlet ports (11) which are uniformly distributed within the first winding limiting surface (4) such that the windings (17) are heated across at least a part of the winding height (h) during the winding process.

3. The tool holder (1) according to claim 1, wherein the at least one hot air outlet port (11) includes at least one circumferential ring groove on the first winding limiting surface (4) such that the windings (17) are heated across at least a part of the winding height (h) during the winding process.

4. The tool holder (1) according to any one of the preceding claims, wherein the first winding limiting surface (4) and the at least one hot air outlet port (11) are provided on an exchangeable tool part (12) allowing that the tool holder (1) can be easily adapted to different configurations of the first winding limiting surface (4) and/or the at least one hot air outlet port (11).

5. A coil winding device (15) configured to manufacture a coil (16) having a defined number of windings (17) formed by a wire (18) having a bonding coat, comprising:
a tool holder (1) according to one of the preceding claims;
a coil counter-tool (6) configured to be received by the fixture (5) of the tool holder (1) and including a second winding limiting surface (7),
wherein the first and second winding limiting surfaces (4, 7) define a winding gap (8) having a longitudinal dimension limiting a winding width (b) and a radial dimension limiting a winding height (h);
at least one hot air source (10) connected to the at least one hot air duct (9) of the tool holder (1); and
a wire guiding (19) configured to guide the wire (18) during the winding process.

6. The coil winding device (15) according to claim 5, wherein the wire guiding (19) is configured to wind the coil (16) by a rotational movement around the winding gap (8).

7. The coil winding device (15) according to claim 5, wherein a rotating coil body is provided in the winding gap (8) configured to wind the coil (16) by a rotational movement.

8. The coil winding device (15) according to any one of claims 5 to 7, wherein the coil counter-tool (6) comprises an ejector (20) configured to eject the coil (16) from the counter-tool (6).

9. A method for manufacturing a coil (16) having a defined number of windings (17), the method comprising at least the following method steps:
winding a wire (18) having a bonding coat in a winding gap (8) of a coil winding device (15), the winding gap (8) having a longitudinal dimension limiting a winding width (b) and a radial dimension limiting a winding height (h);
injecting of hot air into the winding gap (8) during the winding step at least at a part of the radial dimension of the winding gap (8); and
terminating the winding process when the coil (16) reaches a defined number of windings (17).

10. The method according to claim 9, further comprising the method step of removing the wound coil (16) from the winding gap (8).

11. The method according to claim 9 or 10, wherein at the at least one hot air outlet port (11) the hot air has a temperature of 100°C to 300°C, particularly of 140°C to 230°C.

12. The method according to any one of claims 9 to 11, wherein the injection of hot air occurs at a radial circumference surface (4) of the winding gap (2).

13. The method according to any one of the claims 9 to 12, wherein the injection of hot air occurs uniformly at the radial circumference surface (4) of the winding gap (8) through a plurality of hot air outlet ports (11).

14. The method according to any one of the claims 9 to 12, wherein the injection of hot air occurs uniformly at the radial circumference surface (4) of the winding gap (8) through at least one circumferential ring groove.

## Patentansprüche

1. Werkzeughalter (1), der zur Verwendung in einer Spulenwickelvorrichtung (15) ausgebildet ist und aufweist:
einen mit einer ersten Wickelbegrenzungsfläche (4) versehenen Haltekörper (3),
eine Halterung (5), die innerhalb der ersten Wickelbegrenzungsfläche (4) angeordnet und dazu ausgebildet ist, ein mit einer zweiten Wickelbegrenzungsfläche (7) versehenes Spulengegenwerkzeug (6) lösbar aufzunehmen,
wobei die erste und zweite Wickelbegrenzungsfläche (4, 7) einen Wickelspalt (8) mit einer Längsabmessung, die eine Wickelbreite (b) begrenzt, und einer radialen Abmessung, die eine Wickelhöhe (h) begrenzt, definieren,
mindestens einen Heißluftkanal (9), der innerhalb des Haltekörpers (3) vorgesehen und dazu ausgebildet ist, mit einer Heißluftquelle (10) verbunden zu werden, wobei der Werkzeughalter (1) **dadurch gekennzeichnet ist, dass** er ferner
mindestens eine Heißluftauslassöffnung (11), die innerhalb der ersten Wickelbegrenzungsfläche (4) vorgesehen und mit dem mindestens einen Heißluftkanal (9) verbunden ist, aufweist.

2. Werkzeughalter (1) nach Anspruch 1, der ferner eine Mehrzahl von Heißluftauslassöffnungen (11), die gleichmäßig derart innerhalb der ersten Wickelbegrenzungsfläche (4) verteilt sind, dass die Wicklungen (17) über mindestens einen Teil der Wickelhöhe (h) während des Wickelvorgangs erwärmt werden, aufweist.

3. Werkzeughalter (1) nach Anspruch 1, bei dem die mindestens eine Heißluftauslassöffnung (11) mindestens eine umlaufende Ringnut auf der ersten Wickelbegrenzungsfläche (4) derart aufweist, dass die Wicklungen (17) über mindestes einen Teil der Wickelhöhe (h) während des Wickelvorgangs erwärmt werden.

4. Werkzeughalter (1) nach einem der vorangehenden Ansprüche, bei dem die erste Wickelbegrenzungsfläche (4) und die mindestens eine Heißluftauslassöffnung (11) auf einem austauschbaren Werkzeugteil (12) derart vorgesehen sind, dass der Werkzeughalter (1) leicht an unterschiedliche Konfigurationen der ersten Wickelbegrenzungsfläche (4) und/oder der mindestens einen Heißluftauslassöffnung (11) anpassbar ist.

5. Spulenwickelvorrichtung (15), die zur Herstellung einer Spule (16), die eine bestimmte Anzahl von durch einen Draht (18) mit einer Haftschicht ausgebildeten Wicklungen (17) aufweist, ausgebildet ist und aufweist:
einen Werkzeughalter (1) nach einem der vorangehenden Ansprüche,
ein Spulengegenwerkzeug (6), das dazu ausgebildet ist, von der Halterung (5) des Werkzeughalters (1) aufgenommen zu werden, und eine zweite Wickelbegrenzungsfläche (7) aufweist,
wobei die erste und zweite Wickelbegrenzungsfläche (4, 7) einen Wickelspalt (8) mit einer Längsabmessung, die eine Wickelbreite (b) begrenzt, und einer radialen Abmessung, die eine Wickelhöhe (h) begrenzt, definieren,
mindestens eine Heißluftquelle (10), die mit dem mindestens einen Heißluftkanal (9) des Werkzeughalters (1) verbunden ist, und
eine Drahtführung (19), die zum Führen des Drahtes (18) während des Wickelvorgangs ausgebildet ist.

6. Spulenwickelvorrichtung (15) nach Anspruch 5, bei der die Drahtführung (19) dazu ausgebildet ist, die Spule (16) durch eine Drehbewegung um den Wickelspalt (8) herum zu wickeln.

7. Spulenwickelvorrichtung (15) nach Anspruch 5, bei der ein sich drehender Spulenkörper, der zum Wickeln der Spule (16) durch eine Drehbewegung ausgebildet ist, in dem Wickelspalt (8) vorgesehen ist.

8. Spulenwickelvorrichtung (15) nach einem der Ansprüchen 5 bis 7, bei der das Spulengegenwerkzeug (6) einen Auswerfer (20), der zum Auswerfen der Spule (16) aus dem Gegenwerkzeug (6) ausgebildet ist, aufweist.

9. Verfahren zur Herstellung einer Spule (16), die eine bestimmte Anzahl von Wicklungen (17) aufweist, wobei das Verfahren mindestens die folgenden Verfahrensschritte aufweist:
Wickeln eines Drahtes (18) mit einer Haftschicht in einem Wickelspalt (8) einer Spulenwickelvorrichtung (15), wobei der Wickelspalt (8) eine Längsabmessung, die eine Wickelbreite (b) begrenzt, und eine radiale Abmessung, die eine Wickelhöhe (h) begrenzt, aufweist,
Einblasen von Heißluft in den Wickelspalt (8) während des Wickelns zumindest auf einem Teil der radialen Abmessung des Wickelspalts (8), und
Beenden des Wickelvorgangs, wenn die Spule (16) eine bestimmte Anzahl von Wicklungen (17) erreicht.

10. Verfahren nach Anspruch 9, ferner aufweisend den Verfahrensschritt des Entfernens der gewickelten Spule (16) aus dem Wickelspalt (8).

11. Verfahren nach Anspruch 9 oder 10, bei dem an der mindestens einen Heißluftauslassöffnung (11) die Heißluft eine Temperatur von 100°C bis 300°C, insbesondere von 140°C bis 230°C, aufweist.

12. Verfahren nach einem der Ansprüche 9 bis 11, bei dem das Einblasen von Heißluft an einer radialen Umfangsfläche (4) des Wicklungsspaltes (2) erfolgt.

13. Verfahren nach einem der Ansprüche 9 bis 12, bei dem das Einblasen von Heißluft gleichmäßig an der radialen Umfangsfläche (4) des Wickelspaltes (8) durch eine Mehrzahl von Heißluftauslassöffnungen (11) erfolgt.

14. Verfahren nach einem der Ansprüche 9 bis 12, bei dem das Einblasen von Heißluft gleichmäßig an der radialen Umfangsfläche (4) des Wickelspaltes (8) durch mindestens eine umlaufende Ringnut erfolgt.

## Revendications

1. Porte-outil (1) configuré pour être utilisé dans un dispositif d'enroulement de bobine (15), le porte-outil (1) comprenant :
un corps de support (3) pourvu d'une première surface de limitation d'enroulement (4) ;
une fixation (5) disposée à l'intérieur de la première surface de limitation d'enroulement (4), la fixation (5) étant configurée pour recevoir de manière amovible un contre-outil de bobine (6) doté d'une seconde surface de limitation d'enroulement (7),
dans lequel les première et seconde surfaces de limitation d'enroulement (4, 7) définissent un espace d'enroulement (8) ayant une dimension longitudinale limitant une largeur d'enroulement (b) et une dimension radiale limitant la hauteur d'enroulement (h) ;
au moins un conduit d'air chaud (9) pourvu à l'intérieur du corps de support (3) et configuré pour être relié à une source d'air chaud (10) ; le porte-outil (1) est **caractérisé en ce qu'**il comprend en outre
au moins un orifice de sortie d'air chaud (11) pourvu à l'intérieur de la première surface de limitation d'enroulement (4), ledit au moins un orifice de sortie d'air chaud (11) étant relié fluidiquement audit au moins un conduit d'air chaud (9).

2. Porte-outil (1) selon la revendication 1, comprenant en outre une pluralité d'orifices de sortie d'air chaud (11) uniformément répartis dans la première surface de limitation d'enroulement (4), de sorte que les enroulements (17) sont chauffés sur au moins une partie de la hauteur d'enroulement (h) au cours du processus d'enroulement.

3. Porte-outil (1) selon la revendication 1, dans lequel ledit au moins un orifice de sortie d'air chaud (11) comprend au moins une rainure annulaire circonférentielle sur la première surface de limitation d'enroulement (4) de sorte que les enroulements (17) sont chauffés sur au moins une partie de la hauteur d'enroulement (h) pendant le processus d'enroulement.

4. Porte-outil (1) selon l'une quelconque des revendications précédentes, dans lequel la première surface de limitation d'enroulement (4) et ledit au moins un orifice de sortie d'air chaud (11) sont pourvus sur une pièce d'outil interchangeable (12) permettant au porte-outil (1) de s'adapter facilement à différentes configurations de la première surface de limitation d'enroulement (4) et/ou dudit au moins un orifice de sortie d'air chaud (11).

5. Dispositif d'enroulement de bobine (15) configuré pour fabriquer une bobine (16) ayant un nombre défini d'enroulements (17) formés par un fil (18) ayant une couche de liaison, comprenant :
un porte-outil (1) selon l'une des revendications précédentes ;
un contre-outil de bobine (6) configuré pour être reçu par la fixation (5) du porte-outil (1) et comprenant une seconde surface de limitation d'enroulement (7),
dans lequel les première et seconde surfaces de limitation d'enroulement (4, 7) définissent un espace d'enroulement (8) ayant une dimension longitudinale limitant une largeur d'enroulement (b) et une dimension radiale limitant une hauteur d'enroulement (h) ;
au moins une source d'air chaud (10) reliée audit au moins un conduit d'air chaud (9) du porte-outil (1) ; et
un guide-fil (19) configuré pour guider le fil (18) pendant le processus d'enroulement.

6. Dispositif d'enroulement de bobine (15) selon la revendication 5, dans lequel le guide-fil (19) est configuré pour enrouler la bobine (16) par un mouvement de rotation autour de l'espace d'enroulement (8).

7. Dispositif d'enroulement de bobine (15) selon la revendication 5, dans lequel un corps de bobine rotatif est pourvu dans l'espace d'enroulement (8) configuré pour enrouler la bobine (16) par un mouvement de rotation.

8. Dispositif d'enroulement de bobine (15) selon l'une quelconque des revendications 5 à 7, dans lequel le contre-outil de bobine (6) comprend un éjecteur (20) configuré pour éjecter la bobine (16) du contre-outil (6).

9. Procédé de fabrication d'une bobine (16) ayant un nombre défini d'enroulements (17), comprenant au moins les étapes consistant à :
enrouler un fil (18) ayant une couche de liaison dans un espace d'enroulement (8) d'un dispositif d'enroulement de bobine (15), l'espace d'enroulement (8) ayant une dimension longitudinale limitant une largeur d'enroulement (b) et une dimension radiale limitant une hauteur d'enroulement (h) ;
injecter de l'air chaud dans l'espace d'enroulement (8) pendant l'étape d'enroulement au moins sur une partie de la dimension radiale de l'espace d'enroulement (8) ; et
terminer le processus d'enroulement lorsque la bobine (16) atteint un nombre défini d'enroulements (17).

10. Procédé selon la revendication 9, comprenant en outre l'étape consistant à retirer la bobine enroulée (16) de l'espace d'enroulement (8).

11. Procédé selon la revendication 9 ou 10, dans lequel audit au moins un orifice de sortie d'air chaud (11), l'air chaud a une température de 100°C à 300°C, en particulier de 140°C à 230°C.

12. Procédé selon l'une quelconque des revendications 9 à 11, dans lequel l'injection d'air chaud se produit sur une surface de circonférence radiale (4) de l'espace d'enroulement (2).

13. Procédé selon l'une quelconque des revendications 9 à 12, dans lequel l'injection d'air chaud se produit uniformément sur la surface de circonférence radiale (4) de l'espace d'enroulement (8) à travers une pluralité d'orifices de sortie d'air chaud (11).

14. Procédé selon l'une quelconque des revendications 9 à 12, dans lequel l'injection d'air chaud se produit uniformément sur la surface de circonférence radiale (4) de l'espace d'enroulement (8) à travers au moins une rainure annulaire circonférentielle.
